# EUROPEAN PATENT APPLICATION

(11) **EP 1 024 118 A2**
(43) Date of publication of application: **02.08.2000**
(21) Application number: 00101801.9
(22) Date of filing: 28.01.2000
(51) Int. Cl.: C03B 19/09, C03B 19/01, C03B 19/04

(54) **Large diameter quartz glass crucible for pulling up single crystalline silicon**

(30) Priority: 29.01.1999 JP 2288399
(71) Applicant: Heraeus Quarzglas GmbH & Co. KG, 63450 Hanau (DE); Shin-Etsu Quartz Products Co.,Ltd., Shinjuku-ku Tokyo (JP)
(72) Inventor: Sato, Tatsuhiro, Takefu-shi, Fukui 915-0802 (JP); Watanabe, Hiroyuki, Takefu-shi, Fukui 915-0802 (JP)
(74) Representative: Kühn, Hans-Christian

(57) **Abstract**

Object of the present invention is to provide a large diameter quartz glass crucible for pulling up single crystalline silicon which enables stable puling up of single crystalline silicon without generating vibration of the silicon melt during seeding to the silicon melt and pulling up the single crystalline silicon.

This problem can be solved by a quartz glass crucible of large diameter comprises a crucible base body formed of a translucent quartz glass layer and a transparent quartz glass layer formed on an inner wall surface of the crucible base body, characterized in that the wall of said quartz glass crucible has an IR transmittance of 3 to 30% whereby IR transmittance is attributed to structural facts of the wall of said quartz glass crucible such as surface roughness and/or area of pore and/or to the thermal conductivity.

## Description

### Detailed Description of the Invention

### Industrial Field of Application

The present invention relates to a large diameter crucible for use in pulling up single crystalline silicon.

### Prior Art

Conventionally, a so-called Czochlarski method has been widely employed for the production of a single crystalline substance such as a single crystal semiconductor material. This method comprises melting polycrystalline silicon in a vessel, and pulling up a seed crystal while rotating it after immersing an end portion thereof into the melt bath. In this manner, a single crystal having the same crystallographic orientation as the seed crystal can be grown thereon. In general, a quartz glass crucible is used as the vessel for pulling up a single crystal.

In case polysilicon is molten in the quartz glass crucible and a single crystalline silicon is pulled up therefrom, in general, it is not a rare case to encounter with a phenomenon as such that a periodical vibration plane generates on the surface of the silicon melt, thereby resulting in the failure of joining the silicon seed crystal with the silicon melt, or in the generation of disordering in crystallinity of the single crystal silicon.

The phenomenon above is believed to be caused in case the heating energy or the degree of reduced pressure is too large. In such cases, the reaction between the surface of the quartz glass and the contact portion of the upper plane of the liquidus of the silicon melt becomes activated as to increase the generation of gaseous SiO, thereby leading to a tendency that the liquid silicon melt is easily expelled by the surface of the quartz glass and generating an unstable state at the central portion of the liquid silicon melt.

Recently, in particular, single crystal silicon is increasing size to 8" (inches) or more in diameter, and crucibles with larger diameter are being used. This leads to a tendency of increasing the heating energy and the degree of reducing pressure, and the problem of the vibration in melt surface is given greater importance.

### Problems the Invention is to Solve

The present inventors noticed the IR transmittance of the wall of the quartz glass crucible as one of the characteristics of the quartz glass crucible which influences the melt plane vibration of the liquid silicon melt.

More specifically, in pulling up a single crystalline silicon, the quartz glass crucible is subjected to heat supplied by heat conduction and heat radiation from the carbon susceptor heated by the heater provided to the outer periphery thereof. However, it has been confirmed that, if the IR transmittance of the quartz crucible is large, the heat radiation would pass through the quartz glass crucible to reach the silicon melt directly, thereby decreasing the degree of the rise in temperature of the quartz crucible itself.

Thus, it has been found that the aforementioned phenomenon lowers the temperature of the inner surface of the quartz glass crucible, and that it results in suppressing the reaction above to reduce the vibration of the melt plane.

Accordingly, an object of the present invention is to provide a large diameter quartz glass crucible for use in pulling up single crystalline silicon, which enables stable pulling up of single crystalline silicon without generating any vibration of silicon melt while seeding the silicon melt and pulling up the single crystalline silicon.

### Means for Solving the Problems

As a means to overcome the problems above, the present invention provides a large diameter quartz glass crucible for pulling up single crystalline silicon, comprising a crucible base body formed of a translucent quartz glass layer and a transparent quartz glass layer formed on an inner wall surface of said crucible base body, characterized in that the wall body of the quartz glass crucible has an IR transmittance in a range of from 3 to 30 % whereby IR transmittance is attributed to structural facts of the wall of said quartz glass crucible such as surface roughness and/or area of pore and/or to the thermal conductivity.
Transparency of quartz glass occurs when almost no bubbles or pores or other light scattering reasoning defects are noticcable. The measurement of IR transmittance takes place at a wavelength of about 4000 cm⁻¹ .

By using the quartz glass crucible according to the present invention in pulling up single crystalline silicon, single crystalline silicon can be pulled up stable without generating any vibration while seeding the silicon melt and pulling up the single crystalline silicon.

The thermal conductivity at 1300°C of the wall body of the quartz glass crucible above is preferably in a range of from 3.0 to 12.0 x 10⁻³ cal/cm^{·}s^{·}°C.

The outer surface of the wall body of the quartz glass crucible above preferably has a surface roughness Ra in the range of from 2 to 20µm.

The area of pores in the pore layer of the wall of said quartz glass crucible preferably accounts for 0.5 to 5 %.

In order to increase and optimize the IR transmittance of the wall of the quartz glass crucible considering the structural facts of the crucible, there can be mentioned decreasing the wall thickness of the crucible, particularly, decreasing the thickness of the pore layer; or reducing the number and the size of the pores incorporated in the pore layer; or by forming the outer wall of the crucible with a smooth surface, thereby facilitating the transmittance of thermal rays by suppressing the scattering of the thermal rays.

Light absorption can be mentioned as another factor increasing the heating of the wall of the quartz glass crucible. Light includes radiations ranging from those in the ultraviolet region to those in the visible light, and those ranging from the visible light region to the infrared region. Other than the intrinsic absorption of quartz glass, the absorption of light in the visible to the ultraviolet radiation is attributed to the presence of metal impurities, and the absorption of infrared radiations is ascribed to the presence of OH groups. Thus, the heating of the quartz glass crucible can be effectively reduced by decreasing the concentration of both metal impurities and OH groups.

It is also possible to define the characteristic constitution of the quartz glass crucible according to the present invention by thermal conductivity, which collectively refers to the effect of IR transmittance and the effect of light absorption.

### Embodiment of the Invention

An example of the present invention is described hereinafter by making reference to the attached drawing, but it should be understood that the explanation below is provided as an example, and that the present invention is not limited thereby.
Fig. 1 is an explanatory cross section view showing the apparatus for use in producing a quartz glass crucible of the present invention and using the same.
Fig. 2 is a partial cross section view of the wall body of the quartz glass crucible for pulling up single crystalline silicon obtained by the method described in the examples.

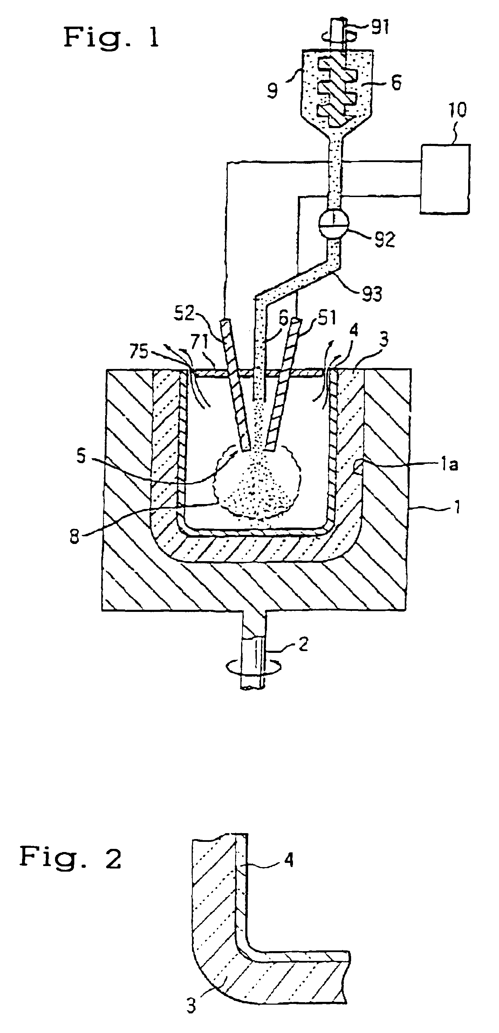

In figure 1 and 2 the following symbols are used:
1: Rotary mold, 1a: Cavity, 2: Rotary shaft, 3: Base body, 4: Inner layer, 5: Arc discharge apparatus, 6: Synthetic quartz powder, 8: High temperature gaseous atmosphere, 9: Quartz powder supply tank, 10: Power source, 51,52: Carbon electrode, 71: Lid, 75: Slit aperture, 91: Stirring blade, 92: Metering feeder, 93: Discharge pipe.

Referring to Fig. 1, a rotary mold 1 is provided with a rotary shaft 2. A cavity 1a is formed in the mold 1, and a translucent quartz glass, i.e., a base body of the quartz glass crucible 3 which constitutes the outer layer, formed from a powder of silicon dioxide, for instance, a powder of naturally occurring quartz, is placed inside the cavity 1a.

The base body 3 is formed by first preparing a premolding having the desired size of the crucible by feeding a powder of silicon dioxide inside the rotating mold 1, thereby allowing the powder to form the shape along the inner wall of the mold 1, and then heating the premolding from the inner plane to melt the powder of silicon dioxide, followed by cooling.

For the heating from the inner plane, there can be used an arc discharge apparatus 5 shown in Fig. 1, which is equipped with carbon electrodes 51 and 52 connected to a power source 10. A plasma discharge apparatus can be used in the place of the arc discharge apparatus 5. For the details of producing the base body 3, reference can be made to JP-B-Hei4-22861 (wherein the term "JP-B-" referred herein signifies "an examined published patent application").

The apparatus shown in Fig. 1 is equipped with a quartz powder supply tank 9 provided to the upper side of the mold 1, which is filled with a powder of synthetic quartz. A discharge pipe 93 provided with a metering feeder 92 is connected to the supply tank 9. A stirring blade 91 is placed inside the supply tank 9. The upper portion of the mold is covered with a lid 71 having a slit opening 75.

After forming the base body 3, or during the formation of the base body 3, a powder of silicon dioxide, for instance, a powder of synthetic quartz 6, is supplied from the discharge pipe 93 by opening the metering feeder 92 to a controlled aperture degree while continuing heating by discharge from the carbon electrodes 51 and 52 provided to the arc discharge apparatus 52. By operating the arc discharge apparatus 5, a high temperature gaseous atmosphere 8 is formed inside the base body 3. Thus, the synthetic quartz powder is supplied to the high temperature gaseous atmosphere 8.

The high temperature gaseous atmosphere refers to the atmosphere formed around the arc discharge provided by the carbon electrodes 51 and 52, which is at a temperature sufficiently high for melting quartz glass, more specifically, at a temperature of two thousand and several hundreds degrees.

At least a portion of the powder of synthetic quartz glass supplied to the high temperature gaseous atmosphere 8 is molten by the heat of the high temperature gaseous atmosphere 8, and, at the same time, it is scattered towards the inner wall plane of the base body 3, where it adheres to the inner wall plane of the base body 3 to form a substantially pore-free quartz glass layer, i.e., the inner layer 4, which is fused into a monolithic body with the base body 3. For the details of forming the inner layer 4, reference can be made to JP-B-Hei4-22861 above.

Fig. 2 shows the cross section view of a quartz glass crucible obtained by the method above. The quartz glass crucible according to the present invention comprises a base body 3, i.e., an outer layer formed by heating and melting a powder of silicon dioxide, for instance, a powder of a naturally occurring quartz, from the inner plane, with an inner plane 4 formed by discharging a powder of silicon dioxide, e.g., a powder of synthetic quartz, to a high temperature gaseous atmosphere to thereby melt and scatter it on the inner wall plane, and thus allowing it to adhere thereon.

The present invention is explained by means of examples, but it should be understood that the present invention is not limited thereby, and that various modifications can be made so long as they do not depart from the scope and the spirit of the present invention.

### Example 1

A powder of naturally occurring quartz glass consisting of particles from 50 to 500µm in diameter was deposited at a uniform thickness of 30 mm on the inside of a molding mold having an inner diameter of 730 mm and being rotated at a rate of 100 rpm (rounds per minute), and while heating and melting it from the inside by using an arc discharge, a powder of synthetic quartz glass powder having an OH concentration of 100 ppm was supplied from the upper side at a rate of 100 g/min. In this manner, a pore-free transparent glass layer was formed over the entire inner plane at a thickness of 3 mm. Upon completion of the melting, the crucible was cooled, and was taken out from the molding mold. The quartz crucible thus obtained had an outer diameter of 720 mm, a thickness of 13 mm, a transparent layer with a thickness of 3 mm, and a pore layer 10 mm in thickness. The characteristics of the quartz glass crucible are summarized in Table 1.

Polysilicon was charged into the quartz glass crucible and molten to perform pulling up of single crystalline silicon. No vibration was observed to occur on the silicon melt during seeding the silicon melt or pulling up a single crystal, and thus, pulling up was stably accomplished.

### Examples 2 to 7

Six further quartz glass crucibles each having the characteristic values while at the same time following the constitution according to the present invention as shown in Table 1 were prepared by employing the same procedure as that used in Example 1. The quartz glass crucibles thus obtained (totally 7) were each charged with polysilicon whereupon the polysilicon was melted to perform the pulling up of the single crystalline silicon. No vibration was observed to occur on the silicon melt during seeding the silicon melt or pulling up a single crystal, and thus, pulling up was stably accomplished.

### Comparative Example 1

A quartz glass crucible having the characteristics included in the constitution of the present invention as such shown in Table 1 was prepared in the same procedure as that of Example 1. Polysilicon was charged and molten in the quartz glass crucible, and a single crystalline silicon was pulled up therefrom. A strong vibration of silicon melt was observed to occur in this case.

**Table 1**

| | Comparative Example 1 | Examples | | | | | | |
|---|---|---|---|---|---|---|---|---|
| | | 1 | 2 | 3 | 4 | 5 | 6 | 7 |
| Transparent layer thickness (mm) | 3 | 3 | 3 | 3 | 3 | 3 | 3 | 3 |
| Pore layer thickness (mm) | 10 | 10 | 10 | 10 | 10 | 10 | 8 | 10 |
| Area of pores (%) | 15 | 15 | 15 | 15 | 3 | 3 | 15 | 15 |
| Outer plane roughness Ra(µm) | 30 | 30 | 30 | 5 | 30 | 30 | 30 | 5 |
| Ry(µm) | 185 | 185 | 185 | 25 | 185 | 185 | 185 | 25 |
| IR transmittance (% at 4000 cm⁻¹) | 2 | 15 | 2 | 2 | 2 | 15 | 15 | 10 |
| Heat conductivity × 10⁻³ (cal/cm·s·°C at 1300 °C) | 1 | 1 | 8 | 1 | 1 | 8 | 1 | 8 |
| Vibration of melt surface | Strong | None | None | None | None | None | None | None |

As described above, the large diameter crucible for pulling up single crystalline silicon of the present invention enables stable pulling up of single crystalline silicon without generating vibration of a silicon melt during seeding of the silicon melt and pulling up the single crystalline silicon.

As can be seen from the values of Table 1 the IR transmittance of the wall of the quartz glass crucible is one of the important characteristics of the quartz glass crucible which influences the melt plane vibration of the liquid silicon melt.

## Claims

1. A large diameter quartz glass crucible for pulling up single crystalline silicon, said crucible comprising a crucible base body formed of a translucent quartz glass layer and a transparent quartz glass layer formed on an inner wall surface of said crucible base body, characterized in that the wall of said quartz glass crucible has an IR transmittance of 3 to 30%, whereby IR transmittance is attributed to structural facts of the wall of said quartz glass crucible such as surface roughness and/or area of pore and/or to the thermal conductivity.

2. The large diameter quartz glass crucible for pulling up single crystalline silicon according to claim 1, wherein the thermal conductivity at 1300°C of the wall of said quartz glass crucible is 3.0 to 12.0 x 10⁻³ cal/cm^{·}s^{·}°C.

3. The large diameter quartz glass crucible for pulling up single crystalline silicon according to claims 1 or 2, wherein the surface roughness Ra of an outer surface of the wall of said quartz glass crucible is 2 to 20 µm.

4. The large diameter quartz glass crucible for pulling up single crystalline silicon according to any of claims 1 to 3, wherein the area of pore in a pore layer of the wall of said quartz glass crucible accounts for 0.5 to 5 %.
